# EUROPEAN PATENT SPECIFICATION

(11) **EP 1 207 704 B1**
(45) Date of publication and mention of the grant of the patent: **12.05.2004**
(21) Application number: 02000568.2
(22) Date of filing: 11.12.1996
(51) Int. Cl.: H04Q 3/00, H04L 29/06

(54) **DNS-based determination of a telephone number for contacting a target entity**
DNS-basierte Feststellung einer Telefonnummer zum Kontaktieren einer Zielstelle
Determination basée sur DNS d'un numéro de téléphone pour contacter une destination

(30) Priority: 20.02.1996 GB 9603590
(43) Date of publication of application: 22.05.2002
(62) Divisional of application: 96941768.2
(73) Proprietor: Hewlett-Packard Company, Palo Alto, CA 94304 (US)
(72) Inventor: Low, Colin, Gloucestershire GL12 7LT (GB); Seaborne, Andrew Franklin, Bristol BS9 3HR (GB)
(74) Representative: Squibbs, Robert Francis

(56) References cited:
- BONETTI ET AL.: "Distribution of RFC 1327 mapping rules via the Internet DNS: the INFNet distributed gateway system" COMPUTER NETWORKS AND ISDN SYSTEMS, vol. 27, no. 3, December 1994 (1994-12), pages 461-469, XP000483278 AMSTERDAM NL
- COMER ET AL.: "Uniform access to Internet directory services" COMPUTER COMMUNICATIONS REVIEW, vol. 20, no. 4, September 1990 (1990-09), pages 50-59, XP000168041 NEW YORK US
- TAO ET AL.: "Internet access via baseband and broadband ISDN gateways" INTERNATIONAL CONFERENCE ON COMPUTERS AND COMMUNICATIONS, 12 April 1994 (1994-04-12), pages 485-490, XP000462600 PHOENIX US
- SEVCIK ET AL.: "Customers in driver's seat: Private Intelligent Network Control Point" ISS '95 WORLD TELECOMMUNICATIONS CONGRESS, vol. 2, 23 April 1995 (1995-04-23), pages 41-44, XP000495622 BERLIN DE

## Description

### Field of the Invention

The present invention relates to determining a telephone number for contacting a target entity. The present invention finds particular application to the provision of IN (Intelligent Network) services in a switched telecommunications system.

As used herein, the term "switched telecommunication system" means a system comprising a bearer network with switches for setting up a bearer channel through the network. The term "switched telecommunication system" is to be taken to include not only the existing public and private telephone systems (whether using analogue phones or ISDN-based), but also broadband (ATM) and other switch-based bearer networks that are currently being implemented or may emerge in the future. For convenience, the term "switched telecommunication system" is sometimes shortened herein to telecommunication system.

Reference to a "call" in the context of a switched telecommunication system is to be understood as meaning a communication through a bearer channel set up across the bearer network, whilst references to call setup, maintenance and takedown are to be taken to mean the processes of setting up, maintaining and taking down a bearer channel through the bearer network. Terms such as "call processing" and "call handling" are to be similarly interpreted.

The term "communication system" when used herein should be understood as having a broader meaning than switched telecommunication system, and is intended to include datagram-based communication systems where each data packet is independently routed through a bearer network without following a predetermined bearer channel.

### Background of the Invention

Telecommunication companies running PSTNs (Public Switched Telephone Networks) and PLMNs (Public Land Mobile Networks) are in the business of providing communication services and in doing so are providing increasing built-in intelligence in the form of "IN services" such as 800 number services and call forwarding. In contrast, the World Wide Web (WWW), which has seen explosive growth in recent times, is an example of an Internet-based global network providing complex information services. These two worlds, that of the large communications utilities and that of the highly dynamic, pioneer-spirit WWW information culture, are uneasy companions and each plans to encroach on the domain previously occupied by the others; thus telephony services will be offered over the WWW and information services over the public communication infrastructure.

The present invention proposes technologies for a more synergetic relationship between these two worlds than is currently envisaged and in order to place the present invention in context, a review will first be given of each of these two worlds.

### Telephone Networks, with IN Services

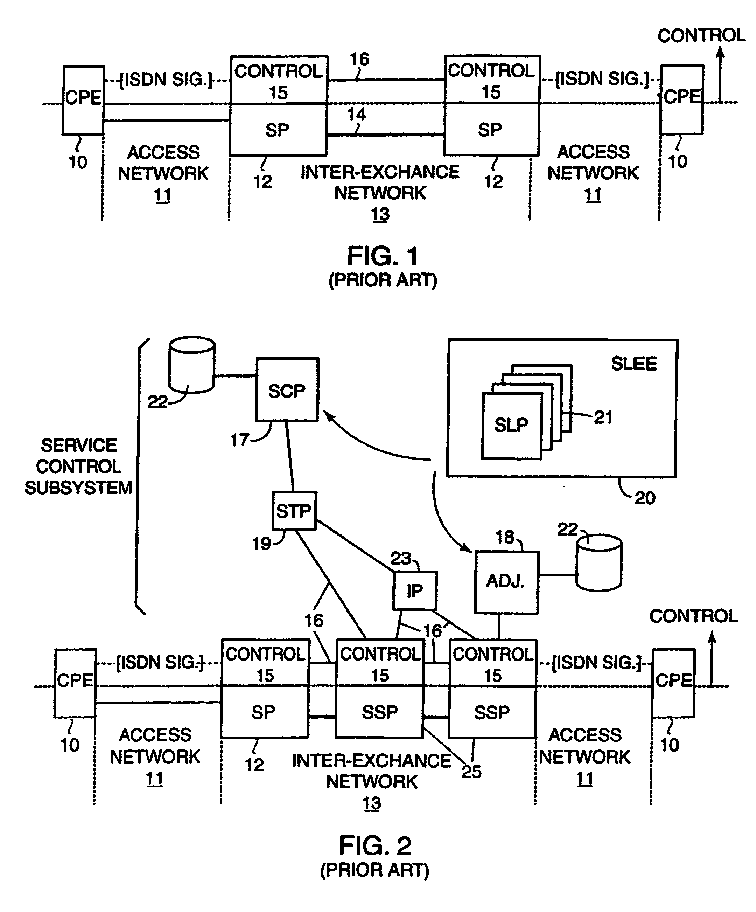

**The Basic PSTN**. The basic service provided by a PSTN (Public Switched Telephone Network) is the interconnection of two telephones (that is, setting up a bearer channel between the telephones) according to a called-party telephone number input at the calling-party telephone. Figure 1 is a simplified representation of a PSTN providing such a service. In particular, customer premises equipment, CPE, 10 (such as standard analogue telephones, but also more recently ISDN terminals) are connected through an access network 11 to switching points, SPs 12. The SPs 12 form nodes in an inter-exchange network 13 made up of interconnecting trunks 14 and SPs that are controlled by control entities 15 in the SPs. The control effected by the control entities 15 is determined by signalling inputs received from the CPEs and other SPs, and involves call setup, maintenance and clearance to provide the desired bearer channel between calling CPE and called CPE. Conceptually, the PSTN may be thought of as a bearer network and a control (signalling) network, the function of the latter being to effect call control through the bearer network, namely the control of setup, maintenance and take down of bearer channels through the bearer network; in practice, the bearer and signalling networks may use the same physical circuits and even the same logical channels.

Thus, where the CPE is a traditional dumb telephone, control signalling between the CPE and its local SP is in-band signalling, that is, the signalling is carried on the same channel as used for voice; this signalling is interpreted and converted at the SPs 12 into signalling between SPs that uses a dedicated common-channel signalling network 16 (implemented nowadays using the SS7 protocol suite). Where the CPE is an ISDN terminal, signalling is carried in a separate channel directly from the CPE on an end-to-end. Modern SPs use the ISUP (ISDN User Part) SS7 protocol for inter-exchange call control signalling whether the CPE is a standard telephone or an ISDN terminal.

**Telephone Numbering Plans** - As certain aspects of the present invention are influenced by the structuring of telephone numbers, a brief description will now be given of the structuring of such numbers. Telephone numbers form an international, hierarchical addressing scheme based on groups of decimal digits. The top level of the hierarchy is administered by the ITU-T, which has allocated single-digit numeric codes to the major geographic zones (for example "1" for North America, "2" for Africa, "3" for Europe, "4" for Europe, "5" for South America and Cuba, etc.). Within each zone countries are assigned 2 or 3 digit codes, so that within zone 3 France is "33", and within zone 4 the UK is "44". Administration of the numbering plan within a country is delegated to a national body, such as the Office of Telecommunications ("Oftel") in the UK. The following further description is based on the UK numbering plan, but the scheme described will be recognised as having widespread applicability.

In the UK all national numbers are prefixed by a code from 01 to 09 (the '0' prefix is dropped in international dialling). The currently assigned codes are "01" for Geographic Area Codes, "02" for Additional Geographic Area Codes, "04" for Mobile Services, "07" for Personal Numbers, and "08" for Special Service (freephone, information). Normal wireline PSTN subscriber telephone numbers are allocated from the Geographic Area Code codes, and currently only codes prefixed by 01 are allocated. Geographic area codes are presently 3 or 4 digits (excluding the leading '0') and there are currently 638 geographic areas each with its own code. A full national UK dialled number takes two forms:

| | | |
|---|---|---|
| **0** | **171** | **634 8700** |
| | area code | local number (7 digit) |
| **0** | **1447** | **456 987** |
| | area code | local number (6 digit) |

The first case has the '0' prefix, a 3 digit area code and a 7 digit local number, and the second case has the '0' prefix, a 4 digit area code, and a 6 digit local number. Further interpretation of the local number will take place within the area exchange, as even a 6 digit address space is too large for a single switch, and for a typical local area several switches may be needed to host the required number of subscriber lines. This interpretation is opaque and is a matter for the area service provider.

In the current PSTN the inherently hierarchical and geographic interpretation of telephone numbers is mirrored by the physical architecture of the network. A telephone number is structured in a way that makes it easy to route a call through the network. At each step, the prefix of the number provides information about the current routing step, and the suffix (perhaps opaquely) provides information about subsequent routing steps; as long as a switch knows how to parse a prefix and carry out a routing step, it does not need to understand the content of the suffix, which is left for subsequent routing steps. For this reason the international and national switching fabric is also organised hierarchically.

**Intelligent Networks.** Returning now to a consideration of the current telephone network infrastruture, in addition to basic call handling, an SP may also serve to provide what are called IN (Intelligent Network) services; in this case the SP is termed a service switching point, SSP. An SSP 25 is arranged to suspend call processing at defined points-in-call upon particular criteria being met, and to delegate the continuation of call processing to a service control subsystem providing a service control function (SCF) either in the form of a service control point, SCP 17 (see Figure 2) or an Adjunct 18. The Adjunct 18 is directly associated with an SSP 25 whilst the SCP 17 and SSP 25 communicate with each other via an extended common channel signalling (CCS) network 16 that may include signal transfer points (STP) 19. The SCP 17 may be associated with more than one SSP 25. Both the SCP 17 and Adjunct 18 provide a service logic execution environment (SLEE) 20 in which instances of one or more service logic programs (SLP) 21 can execute. The SLEE 20 and SLP 21 together provide service control functionality for providing services to the SSP 25.

Service logic running in an SCP or Adjunct will generally make use of subscriber information stored in a service data function (SDF) 22 that may be integral with the SCP/Adjunct or partially or wholly separate therefrom. The service data function (SDF), like the service control function (SCF) forms part of the service control subsystem of the PSTN. It may be noted that some or all of the service control function may be built into the PSTN switches themselves.

In addition to the SCP 17 and Adjunct 18, the Figure 2 network includes an intelligent peripheral (IP) 23. The IP 23 provides resources to the SSP 25 such as voice announcements and DTMF digit collection capabilities. The network will also include an operation system (not shown) that has a general view of the network and its services and performs functions such as network monitoring and control.

In operation, when the SSP 25 receives a call, it examines internal trigger conditions and, possibly, user information (eg dialled digits) to ascertain if the call requires a service to be provided by the service control subsystem 17, 18; the checking of trigger conditions may be carried out at several different points in call processing. Where the SSP 25 determines that a service is required it messages the service control subsystem (either SCP 17 or Adjunct 18) requesting the desired service and sending it a logic representation of the call in terms of its connectivity and call processing status. The service control subsystem then provides the requested service and this may involve either a single interaction between the SSP and service control subsystem or a session of interactions. A typical service is call forwarding which is a called-party service giving expression to an end-user requirement as simple as "if you call me on number X and it rings ten times, try calling number Y". In this case, it is the SSP local to the called end-user that triggers its associated SCP (or Adjunct) to provide this service; it will, of course, be appreciated that the SSP must be primed to know that the service is to be provided for a called number X.

The above-described model for the provision of IN services in a PSTN can also be mapped onto PLMNs (Public Land Mobile Networks) such as GSM and other mobile networks. Control signalling in the case of a mobile subscriber is more complex because in addition to all the usual signalling requirements, there is also a need to establish where a call to a mobile subscriber should be routed; however, this is not a very different problem from a number of called-party IN services in the PSTN. Thus in GSM, the service data function (SDF) is largely located in a system named a Home Location Register (HLR) and the service control function in a system named a Visitor Location Register (VLR) that is generally associated on a one-to-one basis with each SSP (which in GSM terminology is called a Mobile Switching Centre, MSC).

Because subscribers are mobile, the subscriber profile is transported from the HLR to whichever VLR happens to be functionally closest to be mobile subscriber, and from there the VLR operates the (fixed) service using the subscriber profile and interacts with the SSP. The HLR and VLR thus constitute a service control subsystem similar to an SCP or Adjunct with their associated databases.

It is, of course, also possible to provide IN services in private telephone systems and, in this case, the service control function and service data function are generally either integrated into a PABX (Private Automatic Branch Exchange) or provided by a local computer. The service control subsystem, whilst present, may thus not be a physically distinct from the PABX.

The above-described general architectural framework for providing IN services has both strengths and flaws. Its main strength is that it works and many services have been successfully deployed, such as 800 number services, credit card calling, voicemail, and various call waiting and redirection services. However, despite years of standardisation, services are still implemented one-at-a-time on proprietary platforms and do not scale well. The approach has been based on large, fault-tolerant systems which provide services for hundreds of thousands or even millions of subscribers and take years to deploy. Furthermore, since the networks used to support these services also constitute the basic telephone infrastructure, anything attached to these networks must be rigorously vetted. Additionally, each country and operator tends to have local variations of the so-called standards making it difficult to supply standard products and thereby braking the dynamics of competition.

### The World Wide Web

In contrast to the slow deliberate progress of the telephone infrastructure, the WWW has grown explosively from its inception in 1989 to become the primary electronic information distribution service in terms of spread, availability and richness of information content. Anyone can, for a modest outlay, become an information provider with a world-wide audience in a highly interconnected information architecture.

The WWW is a client-server application running over the Internet and using a client-server protocol which mandates only the simplest of exchanges between client and server. This protocol is HTTP (Hyper Text Transfer Protocol) which is optimised for use over TCP/IP networks such as the Internet; the HTTP protocol can, however, also be used over networks using different communication protocol stacks.

Since the availability of literature concerning the WWW has seen the same sort of growth as the WWW itself, a detailed description of the WWW, HTTP and the Internet will not be given herein. An outline description will, however, be given with attention being paid to certain features of relevance to the present invention.

The WWW uses the Internet for interconnectivity. Internet is a system that connects together networks on a worldwide basis. Internet is based on the TCP/IP protocol suite and provides connectivity to networks that also use TCP/IP. For an entity to have a presence on the Internet, it needs both access to a network connected to the Internet and an IP address. IP addresses are hierarchically structured. Generally an entity will be identified at the user level by a name that can be resolved into the corresponding IP address by the Domain Name System (DNS) of the Internet. Because the DNS or adaptions of it are fundamental to at least certain embodiments of the invention described hereinafter, a description will next be given of the general form and operation of the DNS.

**The Domain Name System -** The DNS is a global, distributed, database, and without its performance, resilience and scalability much of the Internet would not exist in its current form. The DNS, in response to a client request, serves to associate an Internet host domain name with one or more Registration Records (RR) of differing types, the most common being an address (A) record (such as 15.144.8.69) and mail exchanger (MX) records (used to identify a domain host configured to accept electronic mail for a domain). The RRs are distributed across DNS name servers world-wide, these servers cooperating to provide the domain name translation service; no single DNS server contains more than a small part of the global database, but each server knows how to locate DNS servers which are "closer" to the data than it is. For present purposes, the main characteristics of the DNS of interest are:
-- The host name space is organised as a tree-structured hierarchy of nodes with each host having a corresponding leaf node; each node has a label (except the root node) and each label begins with an alphabetic character and is followed by a sequence of alphabetic characters or digits. The full, or "fully qualified" name of a host is the string of node labels, each separated by a ".", from the corresponding leaf node to the root node of the hierarchy, this latter being represented by a terminating "." in the name. Thus a host machine "fred" of Hewlett-Packard Laboratories in Bristol, England will have a fully qualified domain name of "fred.hpl.hp.com." (note that if a host name does not have a terminal "." it is interpreted relative to the current node of the naming hierarchy).
-- Each host has one or more associated Registration Records (RRs).
-- There are a plurality of DNS servers each with responsibility for a subtree of the name space. A DNS server will hold RRs for all or part of its subtree - in the latter case it delegates responsibility for the remainder of the subtree to one or more further DNS servers. A DNS server knows the address of any server to which it has delegated responsibility and also the address of the server which has given it the responsibility for the subtree it manages. The DNS servers thus point to each other in a structuring reflecting that of the naming hierarchy.
-- An application wishing to make use of the DNS does so through an associated "resolver" that knows the address of at least one DNS server. When a DNS server is asked by this resolver for an RR of a specified host, it will return either the requested RR or the address of a DNS server closer to the server holding the RR in terms of traversal of the naming hierarchy. In effect, the hierarchy of the servers is ascended until a server is reached that also has responsibility for the domain name to be resolved; thereafter, the DNS server hierarchy is descended down to the server holding the RR for the domain name to be resolved.
-- The DNS uses a predetermined message format (in fact, it is the same for query and response) and uses the IP protocols.

These characteristics of the DNS may be considered as defining a "DNS-type" system always allowing for variations in label syntax, how the labels are combined (ordering, separators), the message format details, and the IP protocols.

Due to the hierarchical naming structure, it is possible to delegate responsibility for administering domains (subtrees) of the name space recursively. Thus, the top-level domains are administered by InterNic (these top-level domains include the familiar 'com', 'edu', 'org', 'int', 'net', 'mil' domains as well as top-level country domains specified by standard two-letter codes such as 'us', 'uk', 'fr' etc.). At the next level, by way of example Hewlett-Packard Company is responsible for all names ending in 'hp.com' and British Universities are collectively responsible for all names ending in 'ac.uk'. Descending further, and again by way of example, administration of the domain 'hpl.hp.com' is the responsibility of Hewlett-Packard Laboratories and administration of the subtree (domain) 'newcastle.ac.uk' is the responsibility of the University of Newcastle-upon-Tyne.

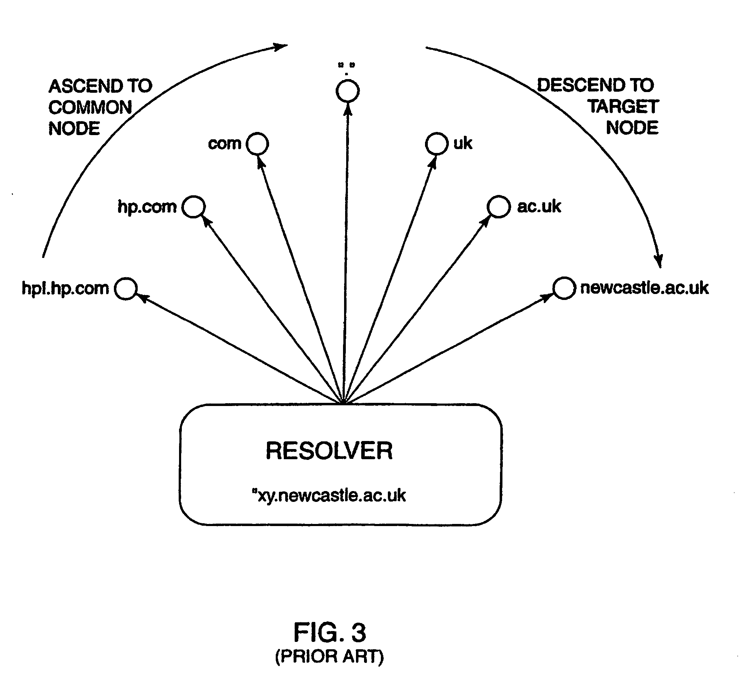

Figure 3 illustrates the progress of an example query made from within Hewlett-Packard Laboratories. The host domain name to be resolved is 'xy.newcastle.ac.uk', a hypothetical machine at the University of Newcastle, United Kingdom. The query is presented to the DNS server responsible for the "hpl.hp.com" subtree. This server does not hold the requested RR and so responds with the address of the "hp.com" DNS server; this server is then queried and responds with the address of the 'com' DNS server which in turn responds with the address of the '.' (root) DNS server. The query then proceeds iteratively down the 'uk' branch until the 'newcastle.ac.uk' server responds with the RR record for the name 'xy' in its subtree.

This looks extremely inefficient, but DNS servers are designed to build a dynamic cache, and are initialised with the addresses of several root servers, so in practice most of the iterative queries never take place. In this case the 'hpl.hp.com' DNS server will know the addresses of several root servers, and will likely have the addresses of 'uk' and 'ac.uk' servers in its cache. The first query to the 'hpl.hp.com' server will return the address of the 'ac.uk' server. The second query to the 'ac.uk' server will return the address of the 'newcastle.ac.uk' server, and the third query will return the RR in question. Any future queries with a 'newcastle.ac.uk' prefix will go direct to the newcastle DNS server as that address will be retained in the "hpl.hp.com" DNS server cache. In practice names within a local subtree are resolved in a single query, and names outside the local subtree are resolved in two or three queries.

Rather than a resolver being responsible for carrying out the series of query iterations required to resolve a domain name, the resolver may specify its first query to be recursive in which case the receiving DNS server is responsible for resolving the query (if it cannot directly return the requested RR, it will itself issue a recursive query to a 'closer' DNS server, and so on).

It should also be noted that in practice each DNS server will be replicated, that is, organised as a primary and one or more secondaries. A primary DNS nameserver initialises itself from a database maintained on a local file system, while a secondary initialises itself by transferring information from a primary. A subtree will normally have one primary nameserver and anything up to ten secondaries - the limitation tends to be the time required by the secondaries to update their databases from the primary. The primary database is the master source of subtree information and is maintained by the domain DNS administrator. The secondaries are not simply standby secondaries but each actively participates in the DNS with dependent servers that point to it rather than to the corresponding primary.

DNS implementations, such as BIND, are widely available as a standard part of most UNIX systems, and can claim to be among the most robust and widely used distributed applications in existence.

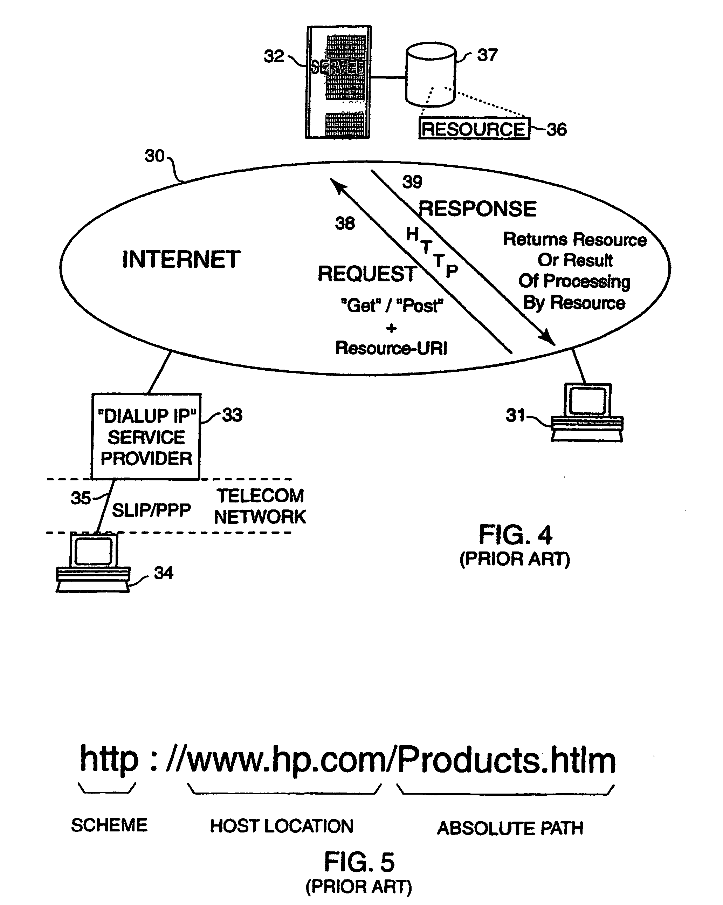

**Operation of the WWW** Referring now to Figure 4 of the accompanying drawings, access to the Internet 30 may be by direct connection to a network that is itself directly or indirectly connected to the Internet; such an arrangement is represented by terminal 31 in Figure 4 (this terminal may, for example, be a Unix workstation or a PC). Having a connection to the Internet of this form is known as having 'network access'. Any entity that has network access to the Internet may act as a server on the Internet provided it has sufficient associated functionality; in Figure 4, entity 32 with file store 37 acts as a server.

Many users of the WWW do not have network access to the Internet but instead access the Internet via an Internet service provider, ISP, 33 that does have network access. In this case, the user terminal 34 will generally communicate with the ISP 33 over the public telephone system using a modem and employing either SLIP (Serial Line Interface Protocol) or PPP (Point-to-Point Protocol). These protocols allow Internet packets to traverse ordinary telephone lines. Access to the Internet of this form is known as "dialup IP" access. With this access method, the user terminal 34 is temporarily allocated an IP address during each user session; however, since this IP address may differ between sessions, it is not practical for the entity 34 to act as a server.

A cornerstone of the WWW is its ability to address particular information resources by means of an Uniform Resource Identifier (URI) that will generally be either a Uniform Resource Locator (URL) that identifies a resource by location, or a Uniform Resource Name (URN) that can be resolved into an URL. By way of example, a full or "absolute" URL will comprise the following elements:

| | |
|---|---|
| scheme | this is the access scheme to be used to access the resource of interest; |
| host | the Internet host domain name or IP address; |
| port | the host port for the (TCP) connection; |
| abs-path | the absolute path of the resource on the host. |

In fact, the 'port' may be omitted in which case port 80 is assumed.

Figure 5 of the accompanying drawings shows an example URL for the Hewlett-Packard products welcome page. In this case, the elements are:

| | |
|---|---|
| scheme | http |
| host | www.hp.com |
| port | omitted (port 80 assumed) |
| abs-path | Products.html |

The HTTP protocol is based on a request/response paradigm. Referring again to Figure 4 of the drawings, given a particular URI identifying a resource 30 to be accessed, a client establishes a connection with the server 31 corresponding to the ''host'' element of the URI and sends a request to the server. This request includes a request method, and the "Request-URI" (which is generally just the absolute path of the resource on the server as identified by the "abs-path" element of the URI); the request may include additional data elements. The server 31 then accesses the resource 36 (here held on storage 37) and responds and this response may include an entity of a type identified by a MIME (Multipurpose Internet Mail Extensions) type also included in the response.

The two main request methods are:

| | |
|---|---|
| GET | This method results in the retrieval of whatever information (in the form of an entity) is identified by the Request-URI. It is important to note that if the Request-URI refers to a data-producing process, it is the produced data which is returned as the entity in the response and not the source text of the process. |
| POST | This method is used to request that the destination server accept the entity enclosed in the request as a new subordinate of the resource identified by the Request-URI. The POST method can be used for annotation of existing resources, providing a message to a bulletin board, providing data to a data-handling process (for example, data produced as the result of submitting a form), and extending a database through an append operation. |

In summary, the GET method can be used to directly retrieve data, or to trigger any process that will return an entity ( which may either be data or a simply an indication of the result of running the process). The POST method is used for registering data and specifying this method is also effective to trigger a process in the server to handle the posted data appropriately.

The passing of information to a process triggered to run on a server using either the GET or POST method is currently done according to an interface called the Common Gateway Interface (CGI). The receiving process is often written in a scripting language though this is not essential. Typically, the triggered server script is used for interfacing to a database to service a query included in a GET request. Another use, already referred to, is to append data associated with a POST request to a database.

Other important factors in the success of the WWW is the use of the HyperText Markup Language (HTML) for representing the makeup of documents transferred over the WWW, and the availability of powerful graphical Web browsers, such as Netscape and Mosaic, for interpreting such documents in a client terminal to present them to a user. Basically, HTML is used to identify each part of a document, such as a title, or a graphic, and it is then up to the browser running in the client terminal to decide how to display each document part. However, HTML is more than this - it also enables a URI and a request method to be associated with any element of a document (such as a particular word or an image) so that when a user points to and clicks on that element, the resource identified by the URI is accessed according to the scheme (protocol) and request method specified. This arrangement provides a hyperlink from one document to another. Using such hyperlinks, a user at a client terminal can skip effortlessly from one document downloaded from a server on one side of the world, to another document located on a server on the other side of the world. Since a document created by one author may include a hyperlink to a document created by another, an extremely powerful document cross-referring system results with no central bureaucratic control.

Hyperlinks are not the only intelligence that can be built into an HTML document.

Another powerful feature is the ability to fill in a downloaded "Form" document on screen and then activate a 'commit' graphical button in order to have the entered information passed to a resource (such as a database) designed to collect such information. This is achieved by associating the POST request method with the 'commit' button together with the URI of the database resource; activating the 'commit' button results in the entered information being posted to the identified resource where it is appropriately handled.

Another powerful possibility is the association of program code (generally scripts to be interpreted) with particular documents elements, such as graphical buttons, this code being executed upon the button being activated. This opens up the possibility of users downloading program code from a resource and then running the code.

It will be appreciated by persons skilled in the art that HTML is only one of several currently available scripting languages delivering the functionality outlined above and it may be expected that any serious Web browser will have built-in support for multiple scripting languages. For example, Netscape 2.0 supports HTML 3.0, Java and LiveScript (the latter being Netscape proprietary scripting Language).

The importance of the role of the graphical Web browser itself should not be overlooked. As well as the ability to support multiple scripting languages, a Web browser should provide built-in support for standard media types, and the ability to load and execute programs in the client, amongst other features. These browsers may be viewed as operating systems for WWW interaction.

### WWW and the Telephone Network

It is possible to provide a telephony service over the Internet between connected terminals by digitising voice input and sending it over the Internet in discrete packets for reassembly at the receiving terminal. This is an example of a communication service on the Internet. Conversely, it is possible to point to a variety of information services provided over the telephone system, such as the Minitel system widely available in France. However, these encroachments into each anothers traditional territories pose no real threat to either the Internet or the public telephone system.

Of more interest are areas of cooperative use of the Internet and the telephone system. In fact, one such area has existed for some considerable time and has been outlined above with reference to Figure 4, namely the use of a modem link over the PSTN from a user computer 34 to an Internet service provider 33 in order to obtain dialup IP access to the Internet. This cooperative use is of a very simple nature, namely the setting up of a bearer channel over the PSTN for subsequently generated Internet traffic; there is no true interaction between the Internet and the PSTN.

Another known example of the cooperative use of the Internet and PSTN is a recently launched service by which an Internet user with a sound card in his/her terminal computer can make a voice call to a standard telephone anywhere in the world. This is achieved by transferring digitised voice over the Internet to a service provider near the destination telephone; this service provider then connects into the local PSTN to access the desired phone and transfers across into the local PSTN the voice traffic received over the Internet. Voice input from the called telephone is handled in the reverse manner. Key to this service is the ability to identify the service provider local (in telephony charging terms) to the destination phone. This arrangement, whilst offering the prospect of competition for the telecom operators for long distance calls, is again a simple chaining together of the Internet and PSTN. It may, however, be noted that in this case it is necessary to provide at least a minimum of feedback to the Internet calling party on the progress of call set to the destination telephone over the PSTN local to that telephone; this feedback need only be in terms of whether or not the call has succeeded.

From the foregoing it can be seen that the current cooperative use of the Internet and telephone system is at a very simple level.

Other prior art of relevance includes:
- "Internet Access via Baseband and Broadband ISDN Gateways" (Tao J et al International Conference on Computers and Communications, Phoenix, p485-490 April 1994) - this article describes the design and implementation of an ISDN to Internet gateway using the TCP/IP protocol suite;
- "Distribution of RFC 1327 Mapping Rules via the Internet DNS: the INFNet distributed Gateway System" (Bonetti et al, Computer Networks and ISDN Systems, vol. 27, No.3 Amsterdam Dec 1994) - this article describes a method of distributing, via the DNS, mapping rules for use by gateways between X400 and RFC822/SMTP mail protocols;
- "Principles of Operation for the TPC.INT Subdomain: Remote Printing -Technical Procedures" (Internet Engineering Task Force RFC 1528, October 1993) - this RFC describes a procedure for ascertaining an e-mail address to which a fax message can be sent over the public Internet, the receiving entity being intended to forward the fax over the local telephone network to the destination fax machine. This procedure involves parsing the destination fax number into a domain name by treating each digit as a separate domain name label. For each such domain name, the domain name system holds a standard MX resource record containing a corresponding email address.

It is an object of the present invention to employ internet technology to facilitate access to a target entity over a communications network when starting with a telephone number.

### Summary of the Invention

According to one aspect of the present invention, there is provided a method of determining a telephone number for contacting a target entity over a telephone system, the target entity being identified by a number string; said method comprising the steps of:
a) - storing in a domain-name-system, DNS, type of distributed database system, records each associated with a corresponding domain name and each holding a telephone number of an entity associated with the domain name, each said domain name being related to a respective number string from which it can be derived by a process including parsing at least a substantial portion of the number string into at least a part of said domain name;
b) - applying said process to the said number string identifying the target entity whereby to form the related domain name; and
c) - supplying the domain name formed in step b) to the DNS-type distributed database to retrieve the telephone number held in the corresponding said record.

According to another aspect of the present invention, there is provided a computer program product intended for use with a computing resource having connectivity to a computer network, to determine a telephone number for contacting a target entity; the computer program product being arranged to provide the computing resource, when executing the computer program, with:
- first means for forming, from a number string identifying the target entity, a domain name by a process including parsing at least a substantial portion of the number string into at least a part of said domain name;
- second means operative to use the network connectivity of the computing resource to supply said domain name to a domain-name-system, DNS, type of database system and to receive back a resource record including a telephone number, and
- third means operative to make available the telephone number received back by the second means, to functionality for setting up a telephone connection to the target entity.

According to a further aspect of the present invention, there is provided a server of a domain-name-system, DNS, type of distributed database system, the server holding at least one resource record for providing a mapping from a domain name associated with the record to a telephone number that is held in the record and is usable for contacting a target entity over a telephone system; at least a substantial portion of the domain name being in the form of a number string, identifying the target entity, that has been parsed into plural domain-name labels to be supplied to the DNS-type distributed database system for retrieval of the telephone number held in the corresponding record.

Advantageously, the DNS-type distributed database system in the foregoing three paragraphs is the domain name system of the Internet.

### Brief Description of the Drawings

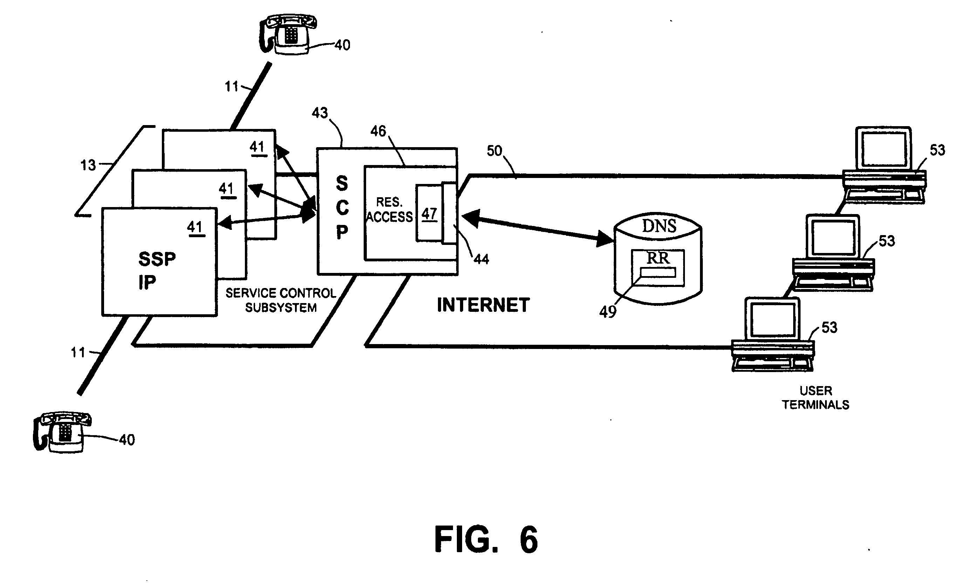

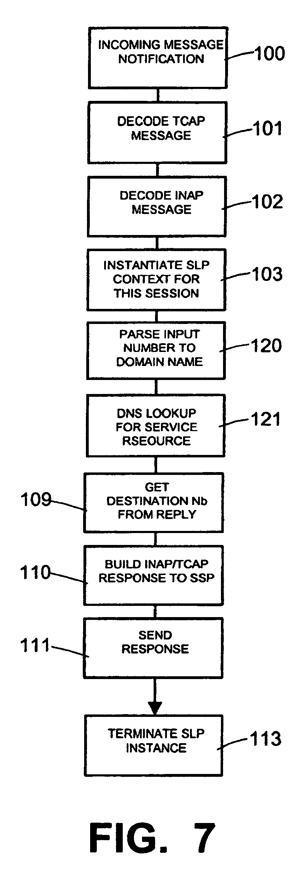

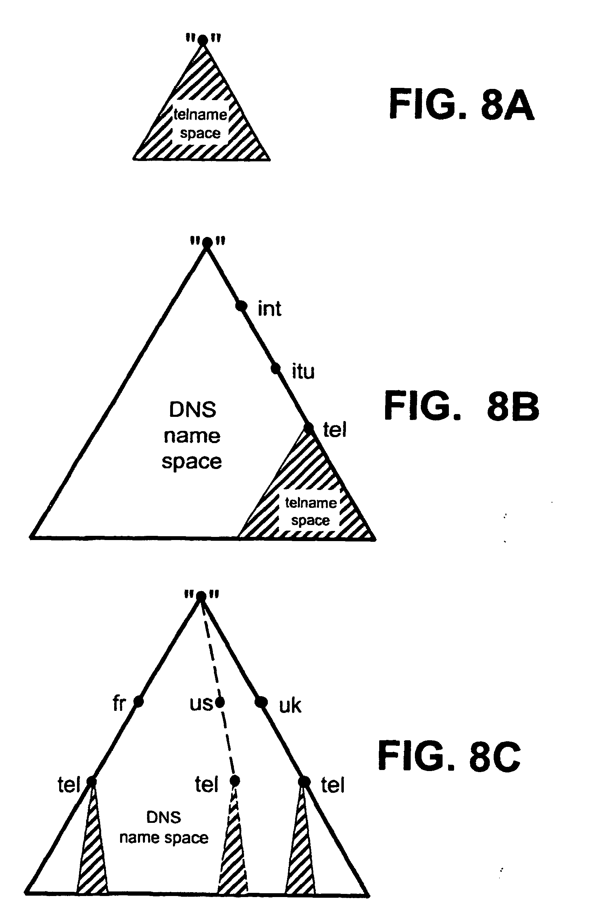

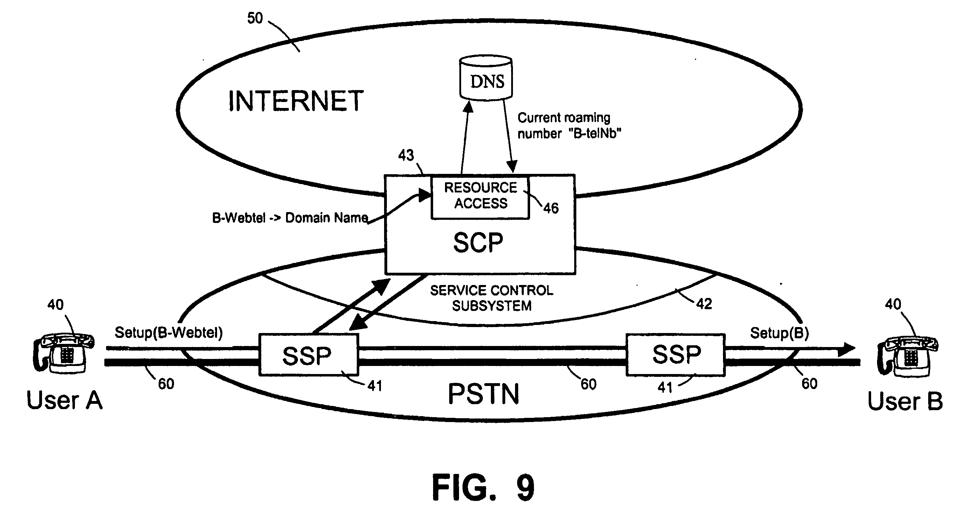

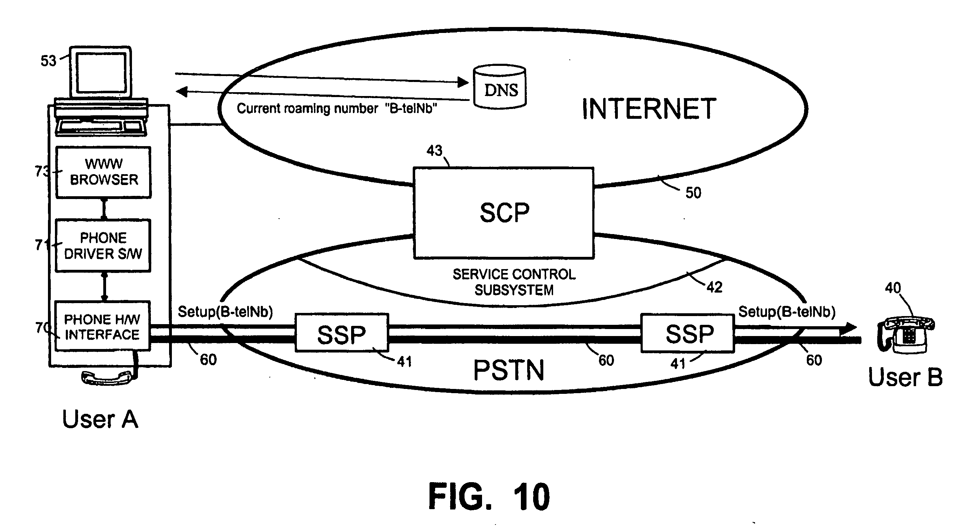

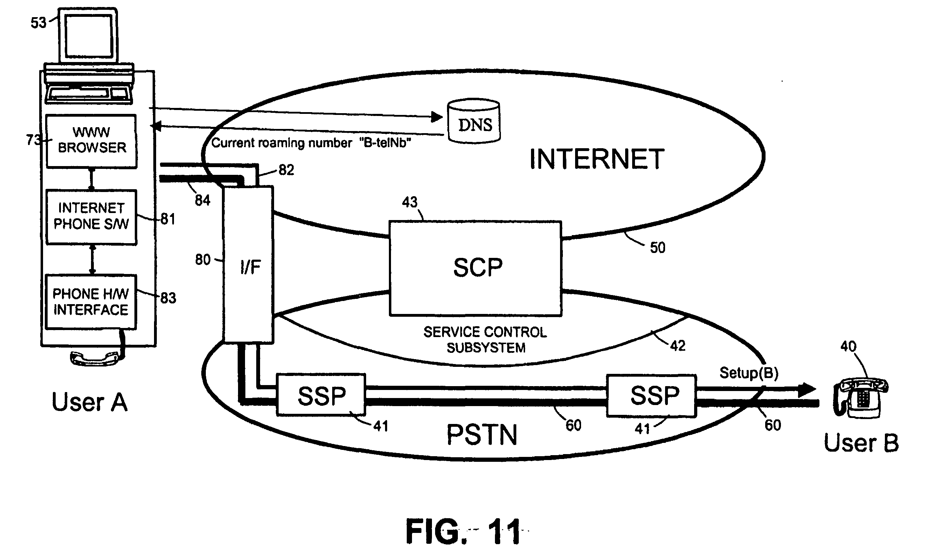

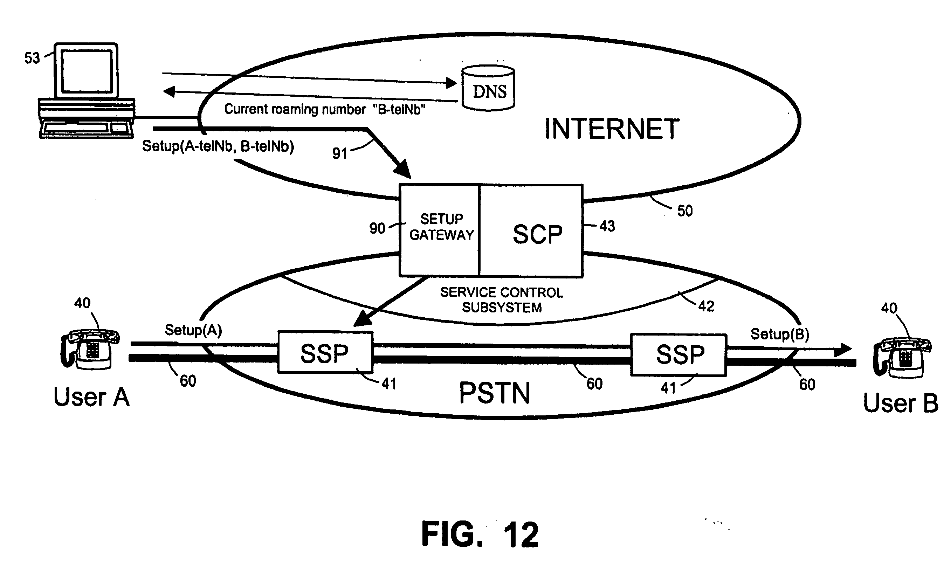

Embodiments of the present invention will now be described, by way of non-limiting example, with reference to the accompanying diagrammatic drawings, in which:
. **Figure 1** is a simplified diagram of a standard PSTN;
. **Figure 2** is a simplified diagram of a known PSTN with IN service capability;
. **Figure 3** is a diagram illustrating host domain name resolution by the DNS of the Internet;
. **Figure 4** is a diagram illustrating the functioning of the World Wide Web;
. **Figure 5** is a diagram illustrating the format of a standard URL;
. **Figure 6** is a diagram of a first arrangement in which service resource items are held on DNS-type servers accessible both by the service control subsystem of a PSTN and by Web users;
. **Figure 7** is a diagram illustrating the processing of a service request by the SCP of Figure 6;
. **Figure 8A** is a diagram depicting a name space (the "telname space") constituted by the domain names derived by a parsing of a predetermined set of telephone numbers;
. **Figure 8B** is a diagram depicting the incorporation of the telname space without fragmentation into the DNS;
. **Figure 8C** is a diagram depicting the incorporation of the telname space in fragmented form into the DNS;
. **Figure 9** is a diagram illustrating the overall operation of the Figure 6 arrangement in providing a roaming number service in response to a telephone number being dialled at a standard phone;
. **Figure 10** is a diagram illustrating the overall operation of the Figure 6 arrangement when utilised by a Web user in setting up a call through a telephone interface integrated into the users Web terminal;
. **Figure 11** is a diagram illustrating the overall operation of an arrangement in which an interface is provided between the PSTN and the Internet for telephone traffic; and
. **Figure 12** is a diagram illustrating the overall operation of an arrangement in which a call setup gateway is provided between the Internet and the PSTN;

### Best Mode of Carrying Out the Invention

Figure 6 illustrates an arrangement for the provision of services in a PSTN conventionally comprising an inter-exchange network 13 (including trunks and switches at least some of which are SSPs 41 with associated IPs), an access network 11 connecting customer permise equipment (here shown as telephones 40) to the network 13, and a service control subsystem 42 including at least one SCP for providing services to the SSPs 41 upon request. It will be appreciated that the Figure 6 representation of a PSTN is highly diagrammatic.

The SCP 43 may operate in a conventional manner responding to service requests from SSPs 41 to run specific service logic on particular data according to information contained in the service request, and to send back to the requesting SSP appropriate instructions for effecting call set up. A service request is generated by the SSP in response to predetermined trigger conditions being met at a trigger check point, there being one or more such check points in the course of handling a call (it may be noted that where the trigger conditions have been downloaded to the SSP from the SCP then it could be said that the SSP is responding to an information request by the SCP when contacting the SCP upon the trigger conditions being met - however, in the present specification, this initial communication from the SSP to the SCP will be referred to as a "service request").

The SCP 43 is also provided with a network access interface 44 to the Internet 50 in order to make use of certain service resource items 49 (also referred to below simply as "service resources") during the course of processing at least certain service requests from the SSPs 41. These service resources 49 are held in Registration Records RR in servers of a DNS-type distributed database system which, as illustrated, can comprise the DNS of the Internet 50.

The service resources take the form of telephone numbers and may be used by an otherwise standard service logic program running on the SCP, by accessing the RR of the required resource using a domain name derived by parsing a number contained in the service request in a manner to be described hereinafter.

Figure 7 is a flow chart illustrating the progress of events in the case where the SCP 43 handles a service request by accessing a service resource. Upon receipt of a service request in an INAP message (step 100), SCP 43 decodes the TCAP/INAP message structure in standard manner (steps 101 and 102) well understood by persons skilled in the art. Next, SCP 43 instantiates a service logic program, SLP, to handle the request (step 103). This SLP is then responsible for accessing the required service resource in the DNS by using a domain name formed by parsing information contained in the service request (steps 120, 121). For example, assuming the service request relates to a called-party service, then the required resource will be indicated by the dialled number and the latter will be used to derive the domain name for accessing the resource. The required resource , which is usually in the form of a destination number is obtained from the RR returned by the DNS (step 109). An INAP/TCAP response message is then prepared and sent to the entity that made the original service request (steps 110 and 111) after which the SLP instance is terminated (113).

The functionality associated with accessing a service resource is schematically represented in Figure 6 by resource access block 46. Block 46 includes a resolution program 47 arranged to access the DNS over the Internet through interface 44 on the basis of parameters passed to block 46.

**Resource Codes -** It is possible that more than one service resource is associated with a particular telephone number, in this case the resource access block 46 will need to know additional information (such as current point-in-call, pic) to enable the appropriate service resource to be identified. If the service resources associated with a number are located in different RRs, then the additional information is also passed to the program 47 to enable it to return the appropriate RR. It is also possible for all the service resources associated with a number to be located in the same RR. In this case, the RR is retrieved across the Internet and the desired resource is then extracted.

Thus, each service resource can be considered as being identified by a respective resource code made up of a first part) used to identify the RR holding the resource, and a second part RRI ("Relative Resource Identifier") used to identify the resource amongst plural resources in the same RR.

### DNS-Type Resource Item Lookup

A more detailed description will now be given as to how a service resource held in a DNS-type distributed database (in Figure 6, the Internet DNS itself) can be accessed on the basis of an input number. A key part of the overall process is the formation of the equivalent of a host domain name from a telephone number of interest; this domain-name equivalent is then resolved into the required resource by a lookup mechanism which in the present example is identical to that employed by the DNS (indeed, the lookup mechanism may be incorporated into the DNS though it can also be independently implemented).

The nature of the DNS has already been described above with reference to Figure 3 when the term ''DNS-type'' system was also introduced.

The basic principles surrounding operation of the DNS-based resource lookup system are:
- every telephone number can be turned into a host domain name (the name space containing such host domain names for the telephone numbers of interest is referred to below as the "telname space"); and
- for every host domain name in the host domain space there is a Registration Record held by the DNS-type database system containing the corresponding service resource.

Thus, an input telephone number forming, in the present case, the resource code 54, is first parsed to form a domain name and then used to retrieve the RR with the corresponding service resource.
There are a number of possibilities at the top level as to how the DNS-type distributed database system could be implemented:
(a) Independent of the DNS. In this option, the telname space constitutes the entire name space to be managed with the root of the telname space being the "." name space root (see Figure 8A where the telname space is shown hatched). In this case, the DNS-type distributed database system is independent of the DNS itself. The DNS-type distributed database system could, of course, use the same basic infrastructure as the DNS (that is, the Internet) or an entirely separate network. Where the telname space comprises all the domain names corresponding to all public telephone numbers worldwide, parsing a full international telephone number would give a fully qualified domain name. Of course, the telname space could be a much smaller set of names such as those derived from internal extension numbers within a company having worldwide operations.
(b) Unfragmented Telname Space within the DNS. In this option, the telname space is a domain of the DNS name space and the DNS-type distributed database system is provided by the DNS itself. Thus, where the telname space comprises all domain names derived from public telephone numbers worldwide, the telname space could be placed within the domain of the ITU, in a special subdomain "tel", the root of the telname space then being "tel.itu.int." (see Figure 8B where again, the hatched area represents the telname space). The responsibility for administering the domain "tel.itu.int." would then lie with the ITU. With this latter example, to form a fully qualified domain name from an input telephone number, after the number has been parsed to form the part of the domain name corresponding to the structuring within the telname space, the tail "tel.itu.int." is added. The fully qualified domain name is then applied to the DNS and the corresponding RR record, holding the required URI, is retrieved. As a further example, the telname space could be all names derived from internal extension numbers within Hewlett-Packard in which case the root of the telname space would be "tel.hp.com." and Hewlett-Packard would be entirely responsible for managing this domain.
(c) Fragmented Telname Space within the DNS. In this option, the telname space is split between multiple domains of the DNS name space and the DNS-type distributed database system is provided by the DNS itself. Thus where the telname space comprises all domain names derived from public telephone numbers worldwide, the telname space could be split between respective "tel" subdomains of each country domain; thus, as illustrated in Figure 8C, the part of the telname space corresponding to French telephone numbers would have a root of "tel.fr." and the part of the telname space corresponding to UK telephone numbers would have a root of "tel.uk.". The responsability for administering each "tel" subdomain would then lie with each country. With this latter example, to form a fully qualified domain name from an input telephone number, the part of the telephone number following the country code is parsed to form the part of the domain name within a country 'tel' subdomain and then a host domain name tail is added appropriate for the country concerned. Thus for a French telephone number, the "33" country code is stripped from the number prior to parsing and used to add a tail of "tel.fr.". The tail appropriate to each country can be stored in a local lookup table. As a further example, two commercial organisations (X company and Y company) with respective DNS domains of "xco.com." and "yco.com." may agree to operate a common Duris system with a telname space split between "tel.xco.com." and "tel.yco.com". In this case, any Y company telephone number input from X company will be parsed to a fully qualified domain name terminating "tel.yco.com." and vice versa.

Consideration will next be given to the parsing of a telephone number into a domain name - in other words, where to insert the "." characters into the number to provide the structuring of a domain name. Of course, as already explained, telephone numbers are hierarchically structured according to each country's numbering plan. Thus one approach would be to follow this numbering plan structuring in dividing up a telephone number to form a domain name. By way of example, the telephone number "441447456987" which is a UK number (country code "44") with a four digit area code ("1447") and six digit local number ("456987") could be divided to form a domain name of 456987.1447.44 (note that the reversal of label order occasioned by the fact that the DNS labels are arranged least significant first). If the telname space is a subdomain of the DNS with a placement as illustrated in Figure 8B, the fully qualified domain name derived from the telephone number would be:
456987.1447.44.tel.itu.int

There are however, difficulties inherent with trying to match the numbering plan hierarchy when parsing a telephone number into a host name. Firstly, in order to parse an international number correctly, it would be necessary for each entity tasked with this operation to know the structuring of each country's numbering plan and where, as in the UK, area codes may be of differing length the required knowledge may need to take the form of a lookup table. Whilst this is not a complicated computational task, it is a major administrative nuisance as it means that each country will need to inform all others about its numbering plan and any updates. The second problem is that a six or seven digit local number is a very large domain; it would be preferable to create subdomains for performance and scaling reasons but there is no obvious way of doing this.

These problems can be overcome by giving up the restriction that the parsing of telephone number into a domain name should match the structuring of national numbering plans. In fact, there is no strong reason to follow such a scheme as DNS servers know nothing about the meaning of the name space. It is therefore possible to parse telephone numbers using a deterministic algorithm taking, for example, 4 digits at a time to limit the size of each subdomain and making it possible to 'insert the dots' without knowing the numbering plan concerned. So long as the DNS domains and zones served by the DNS servers are created correctly it will all work.

For international numbers it would still seem appropriate to separate off the country codes and so a hybrid parsing scheme would be to parse the initial part of a dialled number according to known country codes and thereafter use a deterministic scheme (for example 3,7 or 4,6 or 3,3,4) to separate the digits. Of course, if a fragmented telname space is being used as illustrated in Figure 8C then the country code is used to look up the host name tail and it is only the national part of the number which would be parsed.

Finally, as regards the details of how a DNS server can be set up to hold RR records with items, reference can be made, for example, to "DNS and BIND", Paul Albitz and Criket Liu, O'Reilly & Associates, 1992 which describes how to set up a DNS server using the Unix BIND implementation. The type of the RR records is, for example, text.

It should be noted that DNS labels should not in theory start with a digit. If this convention is retained, then it is of course a trivial exercise when parsing a telephone number to insert a standard character as the first character of each label. Thus, a 4 digit label of 2826 would become "t2826" where "t" is used as the standard starting character.

It will be appreciated that as with domain names, where an input telephone number is not the full number (for example, a local call does not require any international or area code prefix), it would be parsed into a domain name in the local domain.

For small local DNS-type distributed database implementations, it may be possible to have a single server; the implementation should still, however, be considered as of a DNS type provided the other relevant features are present.

### Example Usage of Service Resource

Figure 9 illustrates the operation of a service making use of a resource held in the DNS of the Internet. This service is equivalent to a "personal number" service by which a user can be accessed through a single, unchanging number even when moving between telephones having different real numbers. To achieve this, the user requiring this service (user B in the current example) is allotted a unique personal number (here referred to as the "Webtel" number of B) from a set of numbers all of which have the same leading number string to enable an SSP to readily identify a dialled number as a Webtel number. User B has a service resource 49 stored in an RR of the DNS, this service resource being the current roaming number ("B-teINb") where B can be reached.

Upon a user A seeking to contact user B by dialling the Webtel number of B, the telephone 40 being used by A passes a call set up request to SSP 41 (note that in Figure 9 the bearer paths through the telephony network are shown by the thicker lines 60, the other heavy lines indicating signalling flows). SSP 41 detects the dialled number as a Webtel number and sends a service request to SCP 43 together with B's Webtel number. SCP 43 on receiving this service request initiates a service logic program for controlling translation of B's Webtel number into a current roaming number for B; in fact, in the present case, this program simply requests the resource access block 46 to access the service resource identified by B's Webtel number, and return the result of this access. To this end, block 46 first parses B's Webtel number into a domain name which is then used to access the DNS to retrieve the RR holding B's current roaming number B-telNb. Indue course this number is returned to the SSP 41 which then initiates completion of call set up to the telephone 40 corresponding to B-telNb.

It will be appreciated that although in the Figure 9 example the service request from the SSP was triggered by a leading number string of a dialled number, a service request may be triggered by a variety of triggers including calling-party number, called-party number, or some other user input, such triggers being possibly qualified by call setup progress (for example, called-party number qualified by a busy status or by ringing for more than a certain time).

In the event that an SCP is to provide both a traditional IN service to some users and an equivalent service using a DNS-accessed service resource to other users, then a lookup table may need to be provided in the SCP to ensure that a service request is appropriately handled; such a lookup table can conveniently be combined with the customer record database.

### Web User Interaction

Consideration will next be given to other possible uses of the service resources held in the DNS-type distributed database. For example, if the DNS-type distributed database is user-accessible over the Internet (as would be the case where the DNS-type distributed database is the DNS itself) user A can access the service resources from their computer 53 as depicted in Figure 10. Thus, suppose the DNS contains a RR for B that holds a current roaming number where B can be reached.. Now A can use B's Webtel number to contact the DNS and retrieve B's current roaming number.

In the above scenario, user A has been presented with a number to call over the PSTN. User A can now pick up his standard telephone and dial the number given. In fact, a complication arises if A only has Internet access via a SLIP/PPP connection over an ordinary, non-ISDN, PSTN line since, in this case, A's telephone line is already tied up with making Internet access; with an ISDN connection, as two channels are available, this problem does not arise. One way of overcoming this problem would be to have user A's terminal 53, after obtaining the number to call from B's phone page, automatically suspend its Internet session by storing any required state information (for example, current WWW URL being accessed) and then terminate its SLIP/PPP connection to thereby free up the telephone line. A can then telephone B. At the end of this call, A can resume the suspended Internet session, using the stored state information to return to the point where A left off to call B. An alternative approach is to operate a suitable multiplexing modulation scheme on the telephone line to A allowing voice and data to be simultaneously carried. A number of such schemes already exist. The PSTN would then need to separate the combined data and voice streams coming from A at some point and pass each to its appropriate destination (the Internet data being forwarded to the ISP providing the SLIP/PPP connection for user A and the voice stream being passed to B); of course, data and voice traffic in the reverse direction would also need combining at some point for sending over the last leg to A's terminal.

Rather than A manually dialling B using a standard telephone, another possibility is that user A's terminal is provided with functionality enabling A to make a call over the PSTN from his terminal; this functionality generally comprises a hardware interface 70 (Figure 10) to a telephone line and phone driver software 71 for driving the interface 70 in response to input from application software such as the Web browser 73. A could call up his phone software and enter the required number or, preferably, A need only "select" on screen the number returned from the DNS and then pass it into A's phone software. As an alternative to placing a voice call, if A's terminal is equiped with a suitable modem and controlling software, A could, instead, elect to send a fax or data to B through the PSTN either to B's ordinary number or to one specified in B's RR as the number to be used for such transmissions. Of course, placing a call from A's terminal over the PSTN may be subject to the problem already discussed of conflict for use of the telephone line where this is not an ISDN line and A gains Internet access via a SLIP/PPP connection.

### Internet/PSTN Call Interface

In the Figure 10 scenario, A's access to the PSTN was through a standard telephone interface even though the actual form of A's telephone differed from standard by being integrated into A's computer terminal 53. Figure 11 illustrates a situation where A, after being supplied with B's current roaming number as in the Figure 10 case, calls B via a route that starts out over the Internet and then passes through a user network interface 80 into the PSTN. Interface 80 is arranged to convert between ISDN-type telephone signalling on the PSTN and corresponding signalling indications carried across the Internet in IP packets; in addition, interface 80 transfers voice data from IP packets onto trunk 60 and vice versa.

Thus, upon A initiating a call to B, Internet phone software 81 in A's terminal sends call initiation signalling over the Internet to interface 80, the address of which is already known to A's terminal. At interface 80, the signalling is converted into ISDN-type signalling and passed to SSP 41. Call set up then proceeds in the normal way and return signalling is transferred back through interface 80, over the Internet, to the software 81 in A's terminal. This software passes call setup progress information to the WWW browser 73 for display to A. Upon the call becoming established, A can talk to B through his telephone and A's voice input is first digitised in phone hardware interface 83 and then inserted into IP packets by software 81 to traverse the Internet to interface 80 (see arrow 84); voice traffic from B follows the reverse path.

IN services can be provided to this call by SCP in response to a service request from an SSP 41. Thus, if B's phone is busy, and B is registered for call diversion, SCP 43 on receiving a service request will access B's appropriate phone page for call diversion and retrieve the diversion number. If SSP 41 is not set to initiate a service request on B's telephone being busy, the busy indication is returned to A's terminal where it can be handled in the manner already described with reference to Figure 14.

In fact, interface 80 can be provided with functionality similar to an SSP to set trigger conditions and generate a service request to SCP 43 on these conditions being satisfied.

### Third-Party Call Setup Gateway

Figure 12 illustrates a further arrangement by which A can call B after receiving B's current roaming number. In this case, a third-party call set-up gateway 90 is provided that interfaces both with the Internet 50 and with an SSP 41. Conveniently, gateway 90 can be co-located with SCP 43 (though this is not essential). Gateway 90 has the capability of commanding SSP 41 to set up a call between specified telephones.

Thus, upon A wishing to call B, a third-party call setup request is sent from A's terminal over the Internet to the gateway 90 (see arrow 91). This setup request includes A's telephone number and B's current roaming number. Gateway 90 first attempts to setup the call to A's telephone (which should generally succeed) and thereafter to set up the call to B's identified telephone. Once the call is setup, A and B communicate in standard manner across the PSTN.

If B's phone had been busy, then any of the previously described scenarios may ensue.

As already generally discussed in relation to Figure 10, a complication arises if A only has Internet access via a SLIP/PPP connection over an ordinary, non-ISDN, PSTN line since, in this case, A's telephone line is already tied up with making Internet access when gateway 90 seeks to set up a call to A's telephone. The solutions discussed in respect of Figure 10 (termination of Internet session; multiplexing voice and Internet data on same telephone line) can also be used here. An alternative approach both for Figure 10 and for Figure 16 scenarios is possible if user A's terminal can handle a voice call as digitised voice passed over the Internet. In this case, the voice call can be placed through an interface 80 of the Figure 11 form, and the voice traffic and the Internet communication with the B's phone page and/or gateway 90 are both carried in Internet packets passed over the SLIP/PPP connection to/from A's terminal 53 but as logically distinct flows passed to separate applications running on terminal 53.

It may also be noted that the interface 80 of Figure 11 and the gateway 90 of Figure 12 provide examples of service requests being passed to the service control subsystem by entities other than SSPs 41.

### Variants

Many variants are, of course, possible to the above-described arrangements and a number of these variants are described below. Thus, the DNS-type servers holding the service resource items may be accessible to the service control subsystem by a network other than the Internet.

One possible use for placing telephone numbers in RRs held on DNS-type servers is to provide number portability; in this case, a dialled personal number triggers a lookup in the DNS-type system with all or part of the personal number being first parsed and then applied to the DNS type system to return a current number for call routing. All dialled numbers could be treated as personal numbers or simply a subset of such numbers, this subset comprising numbers that are readily identifiable as personal numbers by, for example, local lookup at an SSP or the presence of a predetermined leading digit string.

Whilst the service control subsystem of the PSTN has been embodied as an SCP in the foregoing examples, it will be appreciated that the functionality of the service control subsystem could be provided as part of an SSP or in an associated adjunct. Furthermore, the triggering of service requests can be effected by equipment other than SSPs, for example by intercept boxes inserted in the SS7 signalling links.

The present invention can also be applied to telephone systems other than just PSTNs, for example to PLMNs and other mobile networks, and to private systems using PABXs. In this latter case, a LAN or campus-wide computer network serving generally the same internal users as the PABX, will take the role of the Internet in the described embodiments.

## Claims

1. A method of determining a telephone number ('B-telnb') for contacting a target entity (B) over a telephone system, the target entity (B) being identified by a number string ('B-Webtel'); said method comprising the steps of:
a) - storing in a domain-name-system, DNS, type of distributed database system, records each associated with a corresponding domain name and each holding a telephone number ('B-telnb') of an entity (B) associated with the domain name, each said domain name being related to a respective number string ('B-Webtel') from which it can be derived by a process including parsing at least a substantial portion of the number string ('B-Webtel') into at least a part of said domain name;
b) - applying said process to the said number string ('B-Webtel') identifying the target entity (B) whereby to form the related domain name; and
c) - supplying the domain name formed in step b) to the DNS-type distributed database to retrieve the telephone number ('B-telnb') held in the corresponding said record.

2. A method according to claim 1, wherein the DNS-type distributed database is the domain name system of the Internet

3. A method according to claim 1 or claim 2, wherein each said number string ('B-Webtel ') is in telephone-number form.

4. A method of accessing a target entity (B) over a telephone system ('PSTN'), comprising the steps of:
- determining a telephone number ('B-telnb') for contacting the target entity according to any one of the preceding claims; and
- using that telephone number to call the target entity (B) over the telephone system ('PSTN').

5. A computer program product intended for use with a computing resource (46;53) having connectivity to a computer network (50), to determine a telephone number ('B-telnb') for contacting a target entity (B); the computer program product being arranged to provide the computing resource, when executing the computer program, with:
- first means (46) for forming, from a number string ('B-Webtel') identifying the target entity (B), a domain name by a process (120) including parsing at least a substantial portion of the number string into at least a part of said domain name;
- second means (46) operative to use the network connectivity of the computing resource to supply said domain name to a domain-name-system, DNS, type of database system and to receive back a resource record including a telephone number ('B-telnb'); and
- third means (70,71) operative to make available the telephone number ('B-telnb') received back by the second means, to functionality for setting up a telephone connection to the target entity (B).

6. A product according to claim 5, wherein the DNS-type distributed database is the domain name system of the Internet (50).

7. A server of a domain-name-system, DNS, type of distributed database system, the server holding at least one resource record (RR) for providing a mapping from a domain name associated with the record to a telephone number ('B-telnb') that is held in the record and is usable for contacting a target entity over a telephone system; at least a substantial portion of the domain name being in the form of a number string ('B- Webtel'), identifying the target entity (B), that has been parsed into plural domain-name labels to be supplied to the DNS-type distributed database system for retrieval of the telephone number held in the corresponding record.

8. A server according to claim 7, wherein the DNS-type distributed database system (DNS) is the domain name system of the Internet (50).

## Patentansprüche

1. Ein Verfahren zum Bestimmen einer Telephonnummer ('B-telnb') zum Kontaktieren einer Zielentität (B) über ein Telephonsystem, wobei die Zielentität (B) durch eine Nummernfolge ('B-Webtel') identifiziert wird; wobei das Verfahren folgende Schritte aufweist:
a) Speichern von Datensätzen in einem verteilten Datenbanksystem vom DNS-Typ (DNS = Domain-Namen-System), wobei jedem Datensatz ein entsprechender Domainname zugeordnet ist und jeder Datensatz eine Telephonnummer (,B-telnb') einer Entität (B) hält, die dem Domainnamen zugeordnet ist, wobei jeder Domainname auf eine jeweilige Nummernfolge ('B-Webtel') bezogen ist, aus der derselbe durch einen Prozeß hergeleitet werden kann, der ein syntaktisches Auswerten zumindest eines wesent-lichen Abschnitts der Nummernfolge ('B-Webtel') in zumindest einen Teil des Domainnamens umfaßt;
b) Anwenden des Prozesses auf die Nummernfolge ('B-Webtel'), die die Zielentität (B) identifiziert, um dadurch den bezogenen Domainnamen zu bilden; und
c) Zuführen des bei Schritt b) gebildeten Domainnamens zu der verteilten Datenbank vom DNS-Typ, um die Telephonnummer ('B-telnb') wieder-zugewinnen, die in dem entsprechenden Datensatz gehalten ist.

2. Ein Verfahren gemäß Anspruch 1, bei dem die verteilte Datenbank vom DNS-Typ das Domain-Namen-System des Internets ist.

3. Ein Verfahren gemäß Anspruch 1 oder 2, bei dem jede Nummernfolge ('B-Webtel') die Form einer Telephon-nummer aufweist.

4. Ein Verfahren zum Zugreifen auf eine Zielentität (B) über ein Telephonsystem ('PSTN'), das folgende Schritte aufweist:
- Bestimmen einer Telephonnummer ('B-telnb') zum Kontaktieren der Zielentität gemäß einem der vorhergehenden Ansprüche; und
- Verwenden dieser Telephonnummer, um die Zielentität (B) über das Telephonsystem ('PSTN') anzurufen.

5. Ein Computerprogrammprodukt, das für eine Verwendung mit einer Rechenressource (46; 53) vorgesehen ist, die eine Anschließbarkeit an ein Computernetzwerk (50) aufweist, um eine Telephonnummer ('B-teInb') zum Kontaktieren einer Zielentität (B) zu bestimmen; wobei das Computerprogrammprodukt angeordnet ist, um die Rechenressource bereitzustellen, wenn dasselbe das Computerprogramm ausführt, mit:
- einer ersten Einrichtung (46) zum Bilden eines Domainnamens, aus einer Nummernfolge ('B-Webtel'), die die Zielentität (B) identifiziert, durch einen Prozeß (120), der ein syntaktisches Auswerten zumindest eines wesentlichen Abschnitts der Nummernfolge in zumindest einen Teil des Domainnamens umfaßt;
- einer zweiten Einrichtung (46), die wirksam ist, die Netzwerkanschließbarkeit der Rechenressource zu verwenden, um den Domainnamen einem Daten-banksystem vom DNS-Typ (DNS = Domain-Namen-System) zuzuführen und einen Ressourcendatensatz einschließlich einer Telephonnummer ('B-telnb') zurückzugewinnen; und
- einer dritten Einrichtung (70, 71), die wirksam ist, um die durch die zweite Einrichtung zurückerhaltene Telephonnummer ('B-telnb') einer Funktionalität zum Aufbauen einer Telephon-verbindung zu der Zielentität (B) zur Verfügung zu stellen.

6. Ein Produkt gemäß Anspruch 5, bei dem die verteilte Datenbank vom DNS-Typ das Domain-Namen-System des Internets (50) ist.

7. Ein Server eines verteilten Datenbanksystems vom DNS-Typ (DNS = Domain-Namen-System), wobei der Server zumindest einen Ressourcendatensatz (RR) zum Liefern einer Abbildung von einem Domainnamen, der dem Datensatz zugeordnet ist, zu einer Telephonnummer ('B-telnb'), die in dem Datensatz gehalten ist und verwendbar ist für ein Kontaktieren einer Zielentität über ein Telephonsystem, hält; wobei zumindest ein wesentlicher Abschnitt des Domainnamens die Form einer Nummernfolge ('B-Webtel') aufweist, die die Zielentität (B) identifiziert, der in mehrere Domainnamenkennungen syntaktisch ausgewertet wurde, um dem verteilten Datenbanksystem vom DNS-Typ für eine Wiedergewinnung der Telephonnummer, die in dem entsprechenden Datensatz gehalten ist, zugeführt zu werden.

8. Ein Server gemäß Anspruch 7, bei dem das verteilte Datenbanksystem vom DNS-Typ (DNS) das Domain-Namen-System des Internets (50) ist.

## Revendications

1. Un procédé de détermination d'un numéro de téléphone ('B-telnb') pour prendre contact avec une entité cible (B) au moyen d'un système téléphonique, l'entité cible (B) étant identifiée par une chaîne numérique ('B-Webtel'); ledit procédé comprenant les étapes consistant à:
a)- enregistrer dans un système de base de données répartie du type système de nom de domaine, ou DNS selon les initiales de Domain name system, des dossiers associés chacun à un nom correspondant de domaine et contenant chacun un numéro de téléphone ('B-telnb') d'une entité (B) associée au nom de domaine, chacun desdits noms de domaines étant relié à une chaîne numérique respective ('B-Webtel') à partir de laquelle il peut être dérivé par un traitement qui inclut de découper au moins une fraction substantielle de la chaîne numérique ('B-Webtel') en au moins une partie dudit nom de domaine;
b)- appliquer ledit traitement à ladite chaîne numérique ('B-Webtel') qui identifie l'entité cible (B) afin de former ainsi le nom de domaine relié; et
c)- envoyer à la base de données répartie du type DNS le nom de domaine formé à l'étape b) afin de récupérer le numéro de téléphone ('B-telnb') contenu dans ledit dossier correspondant.

2. Un procédé selon la revendication 1, dans lequel la base de données répartie du type DNS est le système de nom de domaine de l'Internet.

3. Un procédé selon la revendication 1 ou la revendication 2, dans lequel chacune desdites chaînes numériques ('B-Webtel') est en forme de numéro de téléphone.

4. Un procédé d'accès à une entité cible (B) sur un système téléphonique ('PSTN') qui comprend les étapes consistant à:
- déterminer un numéro de téléphone ('B-telnb') pour prendre contact avec l'entité cible selon l'une quelconque des revendications précédentes; et
- utiliser ce numéro de téléphone pour appeler l'entité cible (B) au moyen du système téléphonique ('PSTN').

5. Un progiciel informatique destiné à être utilisé avec une ressource de calcul (46; 53) à connectivité à un réseau informatique (50), pour déterminer un numéro de téléphone ('B-telnb') pour prendre contact avec une entité cible (B), le progiciel informatique étant agencé de manière à fournir la ressource informatique lors de l'exécution du programme informatique, qui inclut:
- un premier moyen (46) pour former un nom de domaine, à partir d'une chaîne numérique ('B-Webtel') qui identifie l'entité cible (B), par un traitement (120) qui inclut un découpage d'au moins une fraction substantielle de la chaîne numérique en au moins une partie dudit nom de domaine;
- un deuxième moyen (46) qui peut intervenir pour utiliser la connectivité de réseau de la ressource informatique pour fournir ledit nom de domaine à un système de base de données du type système de nom de domaine, ou DNS, et pour recevoir en retour un dossier de ressource qui inclut un numéro de téléphone ('B-telnb'); et
- un troisième moyen (70, 71) qui peut intervenir pour rendre disponible le numéro de téléphone ('B-telnb'), reçu en retour par le deuxième moyen, à une fonctionnalité d'établissement d'une connexion téléphonique vers l'entité cible (B).

6. Un progiciel selon la revendication 5, dans lequel la base de données répartie du type DNS est le système de nom de domaine de l'Internet (50).

7. Un serveur d'un système de base de données répartie du type système de nom de domaine, ou DNS, le serveur contenant au moins un dossier de ressource (RR) pour fournir une application à partir d'un nom de domaine associé au dossier vers un numéro de téléphone ('B-telnb') qui est contenu dans le dossier et est utilisable pour prendre contact avec une entité cible au moyen d'un système téléphonique; au moins une fraction substantielle du nom de domaine étant en forme de chaîne numérique ('B-Webtel'), identifiant l'entité cible (B), qui a été découpée en plusieurs étiquettes de noms de domaines à fournir au système de base de données répartie du type DNS pour récupérer le numéro de téléphone contenu dans le dossier correspondant.

8. Un serveur selon la revendication 7, dans lequel le système (DNS) de base de données répartie du type DNS est le système de nom de domaine de l'Internet (50).
